# FASCICULE DE BREVET EUROPEEN

(11) **EP 0 576 338 B1**
(45) Date de publication et mention de la délivrance du brevet: **21.10.1998**
(21) Numéro de dépôt: 93401581.9
(22) Date de dépôt: 21.06.1993
(51) Int. Cl.: G06K 7/06

(54) **Lecteur de carte à puce**
Chipkartenabtaster
Chip card reader

(30) Priorité: 22.06.1992 FR 9207575
(43) Date de publication de la demande: 29.12.1993
(73) Titulaire: ALCATEL ALSTHOM COMPAGNIE GENERALE D'ELECTRICITE, 75008 Paris (FR)
(72) Inventeur: Hania, Marc, F-75003 Paris (FR); Ozouf, René-Claude, F-93350 Le Bourget (FR)
(74) Mandataire: Pothet, Jean Rémy Emile Ludovic

(56) Documents cités:
- EP-A- 0 213 041
- GB-A- 2 198 595

## Description

La présente invention concerne un lecteur de carte à puce. L'invention a plus particulièrement pour objet un lecteur de carte à puce comprenant un compartiment présentant une ouverture pour l'introduction d'une carte, et au moins un moyen de lecture porté par une pièce de base en matière isolante constituant au moins une partie d'une paroi dudit compartiment, ainsi que des moyens pour placer la carte dans une position de lecture dans laquelle ledit moyen de lecture est en contact avec au moins une région fonctionnelle de la carte.
Il existe déjà des dispositifs de ce genre, mais ceux-ci présentent un certain nombre de défauts. En particulier, les lecteurs de carte à puce conformes aux solutions techniques connues comportent un grand nombre de pièces mécaniques, notamment pour la réalisation des moyens permettant d'amener la carte vers sa position de lecture, ce qui entraîne un prix de revient relativement élevé ainsi que des risques de pannes et augmente, en outre, l'encombrement de l'appareil. D'autre part, les dispositifs connus ne comprennent pas de moyens permettant d'éliminer l'électricité statique engendrée par suite du frottement de la carte avec certaines pièces du lecteur.
On connaît en outre du document GB 2 198 595, un lecteur de carte du type précédent, qui permet de placer une carte dans sa position de lecture sans l'abîmer. Selon ce document, la carte est tout d'abord positionnée à l'intérieur d'un support de type tiroir; puis, le support, transportant la carte, est translaté horizontalement jusqu'à une position dans laquelle la carte se trouve en butée. Deux plans inclinés parallèles permettent alors de guider le support selon un déplacement oblique. Du fait que la carte est en butée, ce déplacement oblique du support se traduit uniquement, au niveau de la carte, par un déplacement de la carte dans une direction orthogonale au plan de la carte. Un tel lecteur reste peu compact du fait de la présence d'un tiroir-support et d'autres pièces mécaniques. Par ailleurs, le problème de l'électricité statique reste non résolu. L'invention a donc pour but d'éliminer les inconvénients des dispositifs de l'art antérieur, ou d'y remédier, notamment en fournissant un dispositif simple et compact permettant l'élimination de l'électricité statique.
A cet effet, le lecteur de carte selon l'invention présente les caractéristique de la revendication jointe.
L'invention sera mieux comprise grâce à la description détaillée, qui va suivre, d'une forme d'exécution particulière du lecteur de carte, cette description étant faite à titre d'exemple non limitatif, en se référant au dessin annexé, dans lequel :

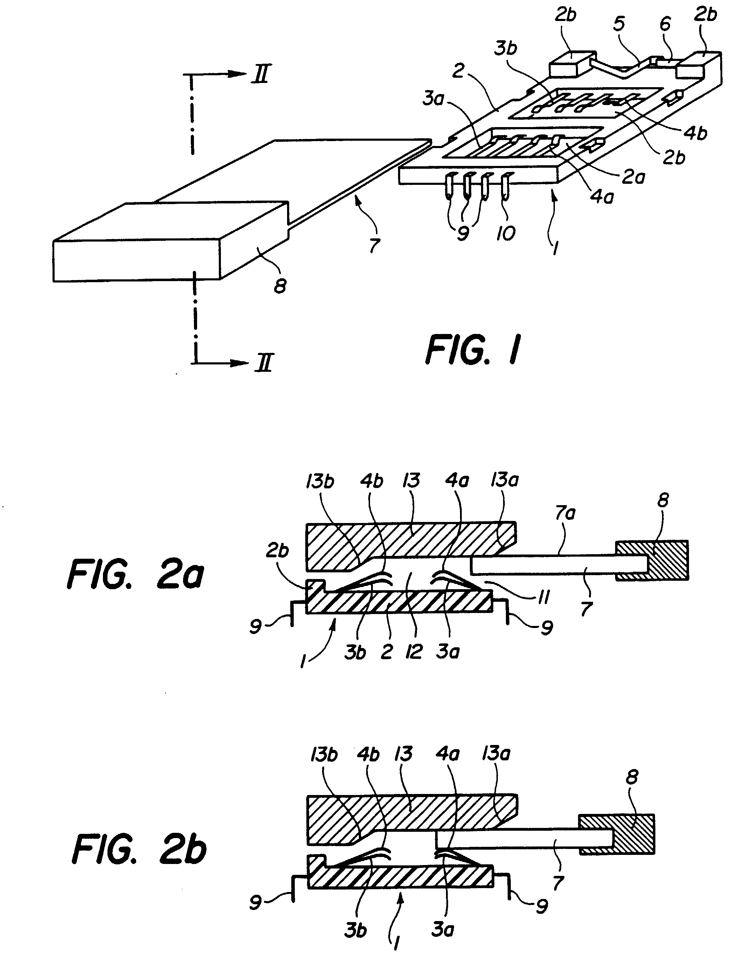

La Fig.1 est une vue schématique, en perspective, d'une pièce de base faisant partie du lecteur de carte selon l'invention, cette vue montrant également la position relative d'une carte à puce, placée dans un support de carte, par rapport à cette pièce de base, lors de l'engagement de cette carte dans le lecteur;
Les Fig. 2(a) à 2(f) montrent, respectivement, en coupe schématique selon le plan ll-ll indiqué à la figure 1, la position relative de la carte et de son support par rapport au lecteur de carte, selon la forme d'exécution illustrée à la Fig. 1, dans six étapes successives de la mise de la carte en position de lecture.

Comme on le voit à la Fig. 1, la pièce de base 1 est constituée par une plaque 2, en matière isolante, comportant deux évidements 2a et 2b, de formes identiques et disposés en positions symétriques par rapport à la partie médiane de la plaque 2.
Un premier et un deuxième groupes de balais de lecture 3a et 3b, formés par des lames métalliques élastiques, ces deux groupes comprenant chacun trois balais identiques, sont placés, parallèles entre eux, respectivement dans l'évidement 2a et l'évidement 2b, les extrémités libres de ces balais étant incurvées pour servir de pièces de contact électrique sur la carte à puce 7 et étant sollicitées pour venir dans un plan situé légèrement au-dessus de la surface supérieure de la plaque 2.
Deux balais 4a et 4b, similaires aux balais de lecture 3a et 3b, sont également disposés, respectivement, dans les évidements 2a et 2b, de la même façon que ces balais de lecture 3a et 3b, mais avec leur extrémités libres, qui sont également incurvées pour servir de pièces de contact avec la carte 7, sollicitées pour venir dans un plan situé en position légèrement supérieure à celui où tendent à se placer les extrémités libres des balais de lecture 3a et 3b. Les balais 4a et 4b seront donc désignés par le terme de "balais surélevés" dans la suite de la description. Les autres extrémités des balais de lecture 3a et 3b, ainsi que celles des balais surélevés 4a et 4b, sont maintenues dans des bords opposés des évidements 2a et 2b, comme illustré à la Fig. 1, et elles se prolongent par des picots conducteurs respectifs 9 et 10, en saillie à l'extérieur de la plaque 2, ces picots étant agencés pour être raccordés à des conducteurs électriques assurant la connexion de la pièce de base 1 du lecteur avec d'autres organes et appareils. Les picots 9 correspondent aux balais de lecture 3a et 3b et les picots 10 aux balais surélevés 4a et 4b.

Avantageusement, comme représenté à la Fig. 1, la plaque 2 est disposée horizontalement et la carte 7, maintenue dans un support de carte 8, est également placée horizontalement lors de son engagement dans le compartiment intérieur 12 (Fig. 2(a)) du lecteur.

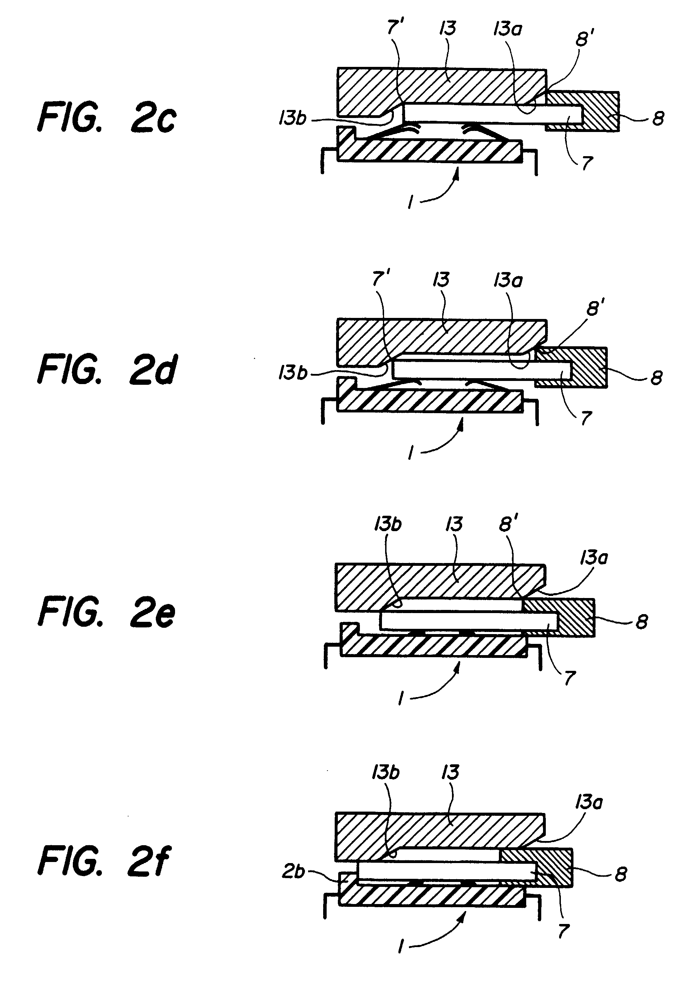

La partie arrière de la plaque 2 porte des blocs 2b qui servent de butée à la plaque 8 (voir Fig. 2(f)) et servent également de support à des lames élastiques 5 et 6 dont la première est repliée en formant un coude dirigé vers l'avant, ces deux lames collaborant entre elles pour constituer un contact de fin de course de la carte 7 d'une manière qui apparaît clairement à la simple vue de leur disposition telle qu'illustrée à la Fig. 1.

Dans la position représentée à la Fig. 2(a), qui correspond à l'engagement de la carte 7, maintenue dans son support 8, dans le lecteur, l'extrémité avant de la carte 7 pénêtre légèrement dans l'ouverture 11 du compartiment intérieur 12 du lecteur. Ce compartiment 12 est délimité entre la pièce de base 1 et une plaque 13 qui constitue la paroi supérieure du compartiment intérieur 12 du lecteur, en regard de la plaque 2. La plaque 13, qui est, dans son ensemble relativement épaisse par rapport à la plaque 2 et surtout par rapport à la carte 7, comporte deux parties d'épaisseurs différentes dont la plus épaisse est placée à l'extrémité arrière du compartiment 12 et la moins épaisse s'étend de l'extrémité de ce compartiment où débouche l'ouverture 11 jusqu'au voisinage de l'extrémité arrière du compartiment 12.

Ces deux parties de la plaque 13 sont reliées par une surface 13b, qui forment un plan incliné obliquement et la face antérieure de la plaque 13 à partir de l'ouverture 11 forme une autre surface plane 13a formant également un plan incliné parallèle au plan 13b.

Comme on le voit à la Fig. 2(a), la carte 7 est présentée de sorte que son bord antérieur peut être éventuellement guidé par la paroi 13a lors de l'engagement de la carte dans l'ouverture 11 et que la face supérieure 7a de la carte 7 vient ensuite s'appuyer contre la surface inférieure de la paroi 13.

Dans l'étape suivante, illustrée à la Fig. 2(b), la carte 7 vient en contact avec le balai surélevé 4a qui la plaque contre la surface inférieure de la paroi 13, ce qui permet l'élimination de l'electricité statique éventuelle de la carte 7, par écoulement à la masse des charges électrostatiques. Il est à noter que les balais 4a et 4b sont positionnés de manière à venir frotter sur des plages non fonctionnelles de la carte 7. A ce stade, la carte 7 ne vient pas encore en contact avec les balais de lecture 3b et 3a.

Dans l'étape suivante, illustrée à la Fig. 2(c), la carte 7 est insérée jusqu'à un point où son bord antérieur 7' arrive juste au niveau du début de la surface 13b qui constitue une rampe pour guider la descente de la carte. A ce stade, la carte 7 est également en contact avec le deuxième balai surélevé 4b mais elle n'est toujours pas en contact avec les balais de lecture 3a et 3b.

Comme on le voit, à ce même stade, le bord antérieur supérieur 8' du support de carte 8 arrive juste au niveau du début de la surface 13a qui constitue une rampe pour guider la descente du support de carte 8 en direction du plan de la face supérieure de la plaque 2 de la pièce de base 1.

Dans l'étape illustrée à la Fig. 2(d), le bord antérieur 7' de la carte 7 est engagé sur la rampe 13b et le bord antérieur 8' du support de carte 8 est engagé sur la rampe 13a. Il est à remarquer que les dimensions de la carte 7, du support de carte 8 et de la plaque 13, y compris les rampes 13a et 13b, sont telles que, grace au parallélisme de ces deux rampes, lorsque la plaque 7 est poussée vers le fond du compartiment 12, elle se rapproche également de la surface supérieure de la plaque 2, tout en restant parallèle à celle-ci.

Dans ce mouvement, la carte s'éloigne de la partie de la paroi inférieure de la plaque 13 qui est parallèle à la plaque 2.

Dans l'étape illustrée à la Fig. 2(e), le bord antérieur 7' de la carte 7 arrive juste au niveau de la fin de la rampe 13b et il est sur le point de s'engager sous la partie d'épaisseur maximale de la plaque 13.

Le bord antérieur 8' du support de carte 8 arrive, lui, juste au niveau de la fin de la rampe 13a et il est sur le point de s'engager sur la partie d'épaisseur minimale de la plaque 13.

Ce stade correspond au début du contact de la surface inférieure de la carte 7 avec les balais fonctionnels 3a et 3b, les balais surélevés 4a et 4b étant, bien entendu, alors écrasés juste au même niveau que les balais fonctionnels 3a et 3b.

Dans l'étape finale, illustrée à la Fig. 2(f), la carte 7 est arrivée en fin de course dans le compartiment 12 et elle bute contre les blocs 2b, en déclanchant le contact de fin de course 5, 6 (Fig. 1).

Le support de carte 8 vient alors s'appuyer contre la surface inférieure de la plaque 13 et la carte 7 est dans sa position de lecture.

Bien entendu, il est clair d'après les Figs. 2(a) à 2(f), que lors du retrait de la carte 7 hors du compartiment 12 du lecteur, les mêmes positions que celles qui viennent d'être décrites sont atteintes dans l'ordre inverse.

Le lecteur de carte selon l'invention est particulièrement léger et peu encombrant et il convient particulièrement bien pour équiper les appareils portatifs notamment les appareils de radio-téléphonie utilisant des micro-cartes à puces.

## Revendications

1. Lecteur de carte à puce comprenant un compartiment (12) présentant une ouverture (11) pour l'introduction d'une carte (7) et au moins un moyen de lecture (3a, 3b) porté par une pièce de base (1) en matière isolante constituant au moins une partie d'une paroi dudit compartiment, ainsi que des moyens pour placer la carte dans une position de lecture dans laquelle ledit moyen de lecture est en contact avec au moins une région fonctionnelle de la carte, lesdits moyens comportant deux plans inclinés (13a, 13b) parallèles entre eux, ménagés sur la surface d'une paroi (13) dudit compartiment (12) en regard de ladite pièce de base (1), caractérisé en ce que, ledit lecteur étant destiné à l'introduction d'une carte (7) pourvue d'un support (8) à son extrémité opposée à celle qui est introduite dans ladite ouverture, et ledit moyen de lecture étant constitué par au moins un balai de lecture, les deux plans inclinés (13a, 13b) sont agencés sur ladite surface pour collaborer simultanément et respectivement avec le bord antérieur de la carte et ledit support de manière à guider la carte vers sa position de lecture dans un mouvement combiné de translations comportant une translation dans une direction parallèle au plan de la carte et une translation dans une direction perpendiculaire au plan de la carte, et en ce que lesdits moyens comportent en outre au moins un balai élastique antistatique (4a, 4b) dont une extrémité est solidaire de la pièce de base (1) et dont l'autre extrémité est libre et est sollicitée pour venir dans un plan plus éloigné de celui de la pièce de base (1) que celui où tendent à se placer l'extrémité libre dudit balai de lecture (3a, 3b), ledit balai élastique antistatique (4a, 4b) tendant à plaquer ladite carte contre ladite paroi (13) et collaborant, lors dudit mouvement, avec lesdits plans inclinés (13a, 13b) pour maintenir la carte constamment parallèle à la pièce de base (1).

## Patentansprüche

1. Chipkartenleser, der eine Abteilung (12), die eine Öffnung (11) zur Einführung einer Karte (7) aufweist, und wenigstens ein Lesemittel (3a, 3b), das von einem Basisteil (1) aus isolierendem Material getragen wird, das wenigstens einen Teil einer Wand der Abteilung bildet, sowie Mittel zum Anordnen der Karte in einer Leseposition umfaßt, in der das Lesemittel mit wenigstens einem funktionellen Bereich der Karte in Kontakt steht, wobei die Mittel zwei zueinander parallele, geneigte Ebenen (13a, 13b) aufweisen, die auf der Fläche einer Wand (13) der Abteilung gegenüber dem Basisteil (1) angeordnet sind, dadurch gekennzeichnet, daß der Leser zur Einführung einer Karte (7) bestimmt ist, die an ihrem Ende, das demjenigen entgegengesetzt ist, das in die Öffnung eingeführt wird, mit einem Träger (8) versehen ist, und wobei das Lesemittel aus wenigstens einem Lesearm besteht, die beiden geneigten Ebenen (13a, 13b) auf der Fläche angeordnet sind, um gleichzeitig und jeweils mit dem vorn befindlichen Rand der Karte und dem Träger zusammenzuarbeiten, um die Karte in einer kombinierten Translationsbewegung zu ihrer Leseposition zu führen, die eine Translation in einer zur Ebene der Karte parallelen Richtung und eine Translation in einer zur Ebene der Karte senkrechten Richtung aufweist, und daß die Mittel außerdem wenigstens einen antistatischen, elastischen Arm (4a, 4b) aufweisen, dessen eines Ende mit dem Basisteil (1) fest verbunden ist und dessen anderes Ende frei ist und belastet ist, um in eine Ebene zu kommen, die von der des Basisteils (1) weiter entfernt ist, als diejenige, in der das freie Ende des Lesearms (3a, 3b) sich anzuordnen strebt, wobei der antistatische, elastische Arm (4a, 4b) danach strebt, die Karte an die Wand (13) anzulegen, und bei der Bewegung mit den geneigten Ebenen (13a, 13b) zusammenarbeitet, um die Karte dauernd zum Basisteil (1) parallel zu halten.

## Claims

1. A smart card reader comprising a compartment (12) with an aperture (11) for the introduction of a card (7) and at least one read means (3a, 3b) carried by a base part (1) of insulating material forming at least a part of one wall of said compartment, as well as means for placing the card in a reading position in which said read means is in contact with at least one operative region of the card, said means for placing the card in a reading position including two inclined planes (13a, 13b) parallel to each other, formed on the surface of a wall (13) of said compartment (12) facing said base part (1), characterized in that, with said reader being designed for the introduction of a card (7) provided with a holder (8) at its end remote from its end which is introduced into said aperture, and with said read means being constituted by at least one read wiper, the two inclined planes (13a, 13b) are arranged on said surface to cooperate simultaneously and respectively with the rear edge of the card and with said support so as to guide the card towards its reading position in a movement made up of translation including translation in a direction parallel to the plane of the card, and translation in a direction perpendicular to the plane of the card, and in that said means for placing the card in a reading position further include at least one resilient antistatic wiper (4a, 4b) of which one end is fixed to the base part (1) and of which the other end is free and is biased into a plane further from that of the base part (1) than that which the free end of said read wiper (3a, 3b) tend to assume, said resilient antistatic wiper (4a, 4b) tending to apply said card against said wall (13) and cooperating during said movement with said inclined planes (13a, 13b) to maintain the card constantly parallel to the base part (1).
